(19) Europäisches Patentamt
European Patent Office
Office européen des brevets

(11) **EP 1 087 209 A2**

(12) **EUROPÄISCHE PATENTANMELDUNG**

(43) Veröffentlichungstag:
28.03.2001 Patentblatt 2001/13

(51) Int. Cl.$^7$: **G01C 22/00**, G01C 25/00, G01S 5/14

(21) Anmeldenummer: 00118040.5

(22) Anmeldetag: 23.08.2000

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **21.09.1999 DE 19945119**

(71) Anmelder:
**Mannesmann VDO Aktiengesellschaft**
**60388 Frankfurt am Main (DE)**

(72) Erfinder: **de Jong, Cornelis Dick**
**5704 DB Helmond (NL)**

(74) Vertreter:
**Rassler, Andrea, Dipl.-Phys.**
**Kruppstrasse 105**
**60388 Frankfurt (DE)**

(54) **Verfahren zum Navigieren eines bodengebundenen Fahrzeugs**

(57) Es wird ein Verfahren zum Navigieren eines bodengebundenen Fahrzeugs angegeben, bei dem eine Weglängengröße mit Hilfe der Umdrehungsanzahl eines Rades (4) gemessen wird.

Hierbei möchte man genauere Grundlagen für die Navigation verwenden können.

Die Weglängengröße wird mit Hilfe von mindestens einem externen Positionsgeber (6) kalibriert.

Fig.2

EP 1 087 209 A2

**Beschreibung**

Die Erfindung betrifft ein Verfahren zum Navigieren eines bodengebundenen Fahrzeugs, bei dem eine Weglängengröße mit Hilfe der Umdrehungsanzahl eines Rades gemessen wird.

Ein derartiges Verfahren wird beispielsweise bei einem "Carin"-Navigationssystem verwendet.

Der Bedarf an Navigationshilfen ist in den letzten Jahren kontinuierlich gestiegen. Hierbei möchte man dem Fahrer eines Kraftfahrzeugs eine möglichst günstige Route aufzeigen können, auf der er von einem Ausgangsort zum Zielort gelangen kann. Die Gesamtaufgabe gliedert sich hierbei in drei Teile, nämlich die Positionsbestimmung des Fahrzeugs, die Routenplanung und die Übermittlung der Route an den Fahrer. Die vorliegende Erfindung betrifft den ersten Abschnitt, nämlich die Positionsbestimmung des Fahrzeugs.

Für die Positionsbestimmung des Fahrzeuges stehen seit einiger Zeit Navigationssatelliten zur Verfügung, die einen Teil eines "Global Positioning System" oder GPS bilden. Mit Hilfe der Satelliten ist zwar eine Standort- oder Positionsbestimmung mit wenigen Einschränkungen überall möglich. Die hierbei erzielbare Genauigkeit liegt jedoch nur im Bereich von 100 m. Dies mag bei Überlandfahrten in den meisten Fällen ausreichen. Kritisch ist diese "Ungenauigkeit" aber dort, wo der Abstand von Straßen kleiner als diese Größe ist, beispielsweise in Städten oder an Verkehrsknotenpunkten, wo mehrere Straßen in einem relativ dichten Abstand aufeinander treffen.

Man ist daher in bestimmten Bereichen dazu übergegangen, eine "Koppelnavigation" zu verwenden, bei der die Position des Fahrzeugs dadurch bestimmt wird, daß man Richtung und Entfernung von einem Ausgangspunkt ermittelt. Diese Art der Navigation wird auch als "dead reckoning" bezeichnet

Für diese Entfernungsmessung kann man beispielsweise ein Fahrzeugrad verwenden, das ohnehin auf dem Boden läuft. Eine Umdrehung des Rades entspricht dann einer bestimmten zurückgelegte Entfernung.

Diese Annahme setzt aber voraus, daß die Verhältnisse des Rades konstant sind und bleiben. Es hat sich herausgestellt, daß dies nicht der Fall ist. Hierbei gibt es mehrere Einflußgrößen. Man kann sich leicht vorstellen, daß beispielsweise bei luftgefüllten Gummireifen Zentrifugalkräfte auf das Rad wirken, wenn sich das Fahrzeug mit größeren Geschwindigkeiten bewegt. Die Änderung des Durchmessers und die damit verbundene Änderung der pro Radumdrehung zurückgelegte Wegstrecke liegt zwar nur im Prozentbereich. Wenn man eine Entfernung von 10 km zurücklegt, hat man aber wiederum eine Ungenauigkeit von etwa 100 m. Ein weiterer Einflußfaktor besteht darin, daß das Fahrzeug in Abhängigkeit von seiner Geschwindigkeit durch Luftströmungen mehr oder weniger stark angehoben oder abgesenkt wird. Auch dies hat Einfluß auf den Reifenumfang. Schließlich darf man auch thermische Gesichtspunkte nicht außer acht lassen. Einer Erwärmung des Reifens, wie sie beispielsweise im Sommer relativ schnell und ansonsten nach einer längeren Fahrt auftreten kann, kann zu einer Änderung des Reifendurchmessers führen. Auch bei Reifendruckverlusten ändert sich der Durchmesser. Langfristige Änderungen ergeben sich durch Abnutzung der Profils.

Der Erfindung liegt die Aufgabe zugrunde, genauere Grundlagen für die Navigation verwenden zu können.

Diese Aufgabe wird bei einem Verfahren der eingangs genannten Art dadurch gelöst, daß die Weglängengröße mit Hilfe von mindestens einem externen Positionsgeber kalibriert wird.

Man ist also nicht mehr darauf angewiesen, einen festen "Umrechnungsfaktor" zwischen der Anzahl der Umdrehungen des Rades und der zurückgelegten Wegstrecke verwenden zu müssen. Dieser Umrechnungsfaktor kann vielmehr geändert werden, wenn sich eine Notwendigkeit dafür ergibt. Die zurückgelegte Entfernung kann zusätzlich dadurch bestimmt werden, daß man einen oder mehrere externen Positionsgeber, beispielsweise Satelliten, verwendet und die mit Hilfe dieses Positionsgebers gewonnenen Entfernungswerte vergleicht mit den Entfernungswerten, die man mit Hilfe des Rades gewonnen hat. Die mit Hilfe der Satelliten gewonnen Informationen verwendet man nicht unmittelbar zur Positionsbestimmung, sondern nur mittelbar für die Verbesserung der Genauigkeit der Meßergebnisse.

Vorzugsweise ermittelt man zur Kalibrierung einen ersten Geschwindigkeitswert mit Hilfe der Umdrehungsanzahl des Rades und einen zweiten Geschwindigkeitswert mit Hilfe des externen Positionsgebers und verwendet beide Geschwindigkeitswerte zur Kalibrierung. Wie oben erwähnt, ist die Bestimmung der absoluten Position des Fahrzeugs gegenüber dem externen Positionsgeber ebenfalls mit gewissen Ungenauigkeiten behaftet. Hinzu kommt, daß beispielsweise bei der Verwendung von Satelliten als Positionsgebern ein Positionssignal lediglich mit einer Frequenz von etwa 1 Hz gewonnen werden kann. Allerdings läßt sich die Geschwindigkeit gegenüber den Positionsgebern mit einer relativ höheren Genauigkeit gewinnen. Wenn man in gleicher Weise die Geschwindigkeit aus der Radumdrehung ermittelt, hat man auf einfache Weise zwei Größen, die man leicht miteinander in Beziehung setzen kann.

Hierbei ist besonders bevorzugt, daß der zweite Geschwindigkeitswert mit Hilfe des Dopplereffekts bestimmt wird. Damit steht eine hochgenaue Vorgehensweise zur Bestimmung der Geschwindigkeit gegenüber dem Positionsgeber zur Verfügung. Um den Dopplereffekt ausnutzen zu können, reicht es aus, einige wenige Schwingungen eines Signals zu erfassen, das von dem externen Positionsgeber, beispielsweise einem Satelliten abgegeben wird. Damit steht in kurzen Abständen eine Information über die augenblickliche Geschwindigkeit des Fahrzeugs zur Verfügung, die mit einer relativ großen Genauigkeit der tatsächlichen Geschwindigkeit des Fahrzeugs entspricht.

Vorzugsweise erfolgt die Kalibrierung zumindest abschnittsweise fortlaufend. Man kann damit auch Änderungen ausgleichen, die sich während der Fahrt ergeben, beispielsweise durch sich ändernde Temperaturverhältnisse, Geschwindigkeiten oder ähnliches.

Mit Vorteil wird einer der beiden Geschwindigkeitswerte in eine von mehreren Klassen eingeordnet, von denen jede einen vorbestimmten Geschwindigkeitsbereich umfaßt, wobei ein Kalibrierungswert in einer Klasse mit Hilfe der Geschwindigkeitswerte aus dieser Klasse ermittelt wird. Hierbei trägt man der Tatsache Rechnung, daß eine Kalibrierung auf der Basis der Umdrehungsanzahl eines Rades um so genauer ist, je größer die Geschwindigkeit ist, d.h. je öfter sich das Rad pro Zeiteinheit dreht. Der Grund hierfür liegt darin, daß bei höheren Geschwindigkeiten die über den Doppler-Effekt bestimmten Geschwindigkeitswerte genauer sind. Wenn man nun bei einer höheren Geschwindigkeit den "Umrechnungsfaktor" ermittelt, dann besteht eine große Wahrscheinlichkeit dafür, daß dieser genauer ist als ein Umrechnungsfaktor, den man bei einer niedrigeren Geschwindigkeit ermitteln würde. Man kann hierdurch auch eine Geschwindigkeitsabhängigkeit der Länge pro Puls berücksichtigen.

Hierbei wird bevorzugt, daß bei vorbestimmten Geschwindigkeiten ein Kalibrierungswert aus einer vorbestimmten höheren Geschwindigkeitsklasse zur Ermittlung der Entfernung verwendet wird, wenn dieser vorliegt. Man nutzt also die höhere Genauigkeit bei höheren Geschwindigkeiten auch dann aus, wenn das Fahrzeug langsamer fährt.

Es kann allerdings vorkommen, daß beispielsweise zu Beginn einer Fahrt noch keine Kalibrierung bei einer höheren Geschwindigkeit möglich war. In diesem Fall verwendet man entweder eine Kalibrierung aus der niedrigeren Geschwindigkeitsklasse oder dem niedrigeren Geschwindigkeitsbereich.

Mit Vorteil wird jeder Kalibrierungswert aus einer Vielzahl von Kalibrierungsvorgängen ermittelt. Damit erhöht man die Genauigkeit. Wenn ein Fehler bei einem Kalibrierungsvorgang auftritt, spielt dieser Fehler nur eine untergeordnete Rolle. Ein Kalibrierungswert kann beispielsweise auch nur dann als "gültig" angesehen werden, wenn eine vorbestimmte Mindestanzahl von Kalibrierungsvorgängen stattgefunden hat.

Vorzugsweise wird der Kalibrierungswert durch eine Filterung der Ergebnisse der einzelnen Kalibrierungsvorgänge gebildet. Diese Filterung glättet den Verlauf der Ergebnisse der einzelnen Kalibrierungsvorgänge und macht somit den Kalibrierungswert gleichmäßiger. Hierbei berücksichtigt man, daß plötzliche Änderungen der pro Umdrehung zurückgelegten Wegstrecke relativ selten sind. Sollten sich daher entsprechende Meßergebnisse ergeben, können diese zwar berücksichtigt werden. Ihr Einfluß auf die Kalibrierung bleibt aber gering.

Bevorzugterweise unterbleibt die Kalibrierung, wenn die Beschleunigung, die mit Hilfe des externen Positionsgebers ermittelt wird, einen vorbestimmten Beschleunigungswert überschreitet. In diesem Fall werden die Meßergebnisse beispielsweise verworfen. Wenn das Fahrzeug beschleunigt oder gebremst wird, steht die notwendige Information beispielsweise über die Geschwindigkeit nicht mit der erforderlichen Konstanz zur Verfügung.

Bevorzugterweise ist der vorbestimmte Beschleunigungswert $1 \text{ m/s}^2$. Es hat sich herausgestellt, daß bei Beschleunigungswerten oberhalb dieser Grenze eine starke Abnahme der Genauigkeit zu beobachten ist.

Bevorzugterweise unterbleibt die Kalibrierung, wenn die Geschwindigkeit, die mit Hilfe des externen Positionsgebers ermittelt wird, kleiner als 5 m/s ist. Hierbei berücksichtigt man die Tatsache, daß die Geschwindigkeitsermittlung gegenüber manchen externen Positionsgebern mit einem systematischen Fehler behaftet ist, der vielfach eine feste Größe aufweist. Je kleiner die Geschwindigkeit ist, desto stärker wirkt sich dieser Fehler aus. Je höher die Geschwindigkeit ist, desto geringere Bedeutung kann man dem Fehler beimessen.

Vorzugsweise ermittelt man als Weglängengröße eine Entfernung pro Puls, wobei die Pulse aufintegriert werden, bis ein neues Signal vom externen Positionsgeber zur Verfügung steht. In diesem Fall nutzt man die Tatsache, daß man die Signale des externen Positionsgebers mit vorbestimmten zeitlichen Abständen, beispielsweise mit einer Frequenz von 1 Hz abgibt, als Kriterium dafür, wann eine erneute Kalibrierung vorgenommen werden kann. Hierbei trägt man der Tatsache Rechnung, daß bei ungünstigen Umgebungsbedingungen, beispielsweise in den Bergen oder in einer Straße mit vielen Hochhäusern, das Signal des externen Positionsgebers nicht immer empfangen werden kann. In diesem Fall werden die zeitlichen Abstände zwischen einzelnen Kalibrierungen eben entsprechend verlängert, bis man erneut ein Signal vom externen Positionsgeber empfängt oder andere, vorgegebene Bedingungen, aufgetreten sind.

Die Erfindung wird im folgenden anhand eines bevorzugten Ausführungsbeispiels in Verbindung mit der Zeichnung näher beschrieben. Hierin zeigen:

Fig. 1    eine schematische Darstellung eines Navigationssystems und

Fig. 2    ein schematisches Blockschaltbild zur Ermittlung einer Weglängengröße.

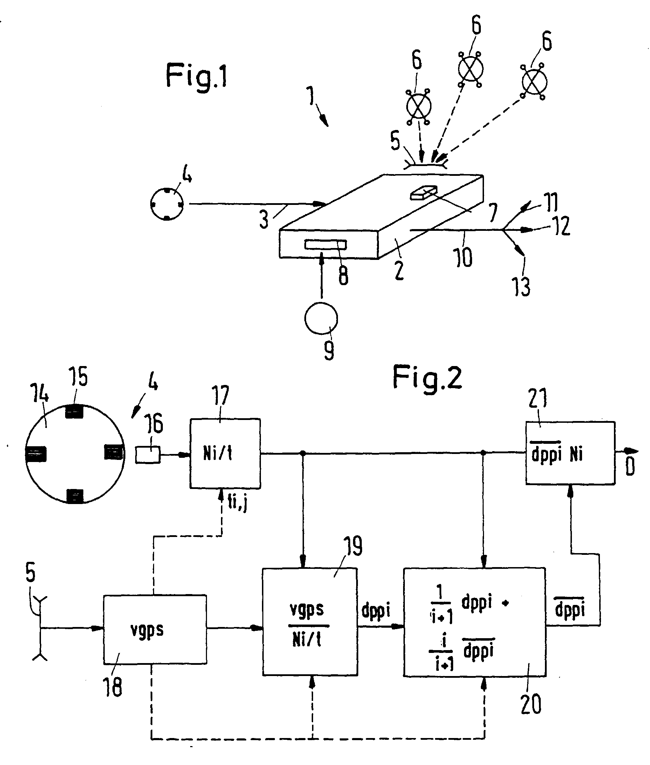

Fig. 1 zeigt ein System 1 zum Navigieren eines nicht näher dargestellten Landfahrzeugs, beispielsweise eines PKW oder LKW.

Das System 1 weist eine Verarbeitungseinrichtung 2 auf. Die Verarbeitungseinrichtung 2 weist einen Eingang 3 auf, über den Impulse von einem Tachometer 4 eingespeist werden können. Der Tachometer 4 ist in nicht näher dargestellter Weise mit einem Rad verbunden, das bestimmungsgemäß permanent Bodenkontakt hat. Solange sich das Fahrzeug bewegt, wird das Rad gedreht und gibt pro Umdrehung eine vorbestimmte Anzahl von Pulsen ab, im vorliegenden Fall vier Impulse.

Ferner weist die Verarbeitungseinrichtung 2 eine Antenne 5 auf, mit deren Hilfe sie in der Lage ist, Signale von Satelliten 6 zu empfangen. Wie dies vom "Global Positioning System" oder GPS her bekannt ist, läßt sich die Position der Verarbeitungseinrichtung 2 dann relativ genau bestimmen, wenn die Entfernung zu drei Satelliten 6 gemessen werden kann, beispielsweise über die Laufzeit von Signalen von den Satelliten 6 zur Antenne 5. Allerdings ist die hierdurch ermittelbare Position mit einer Ungenauigkeit in der Größenordnung von 50 bis 100 m belastet.

Die Verarbeitungseinrichtung 2 weist in nicht näher dargestellter Weise auch noch eine Einrichtung 7 zum Feststellen einer Bewegungsrichtung auf. Diese ist in vielen Fällen als Gyroskop ausgebildet. Da sie aber für die vorliegende Erfindung keine größere Rolle spielt, wird sie nicht näher beschrieben.

Der Vollständigkeit halber sei erwähnt, daß die Verarbeitungseinrichtung 2 auch noch einen Aufnahmeschacht 8 für einen Datenträger 9 aufweist, beispielsweise eine CD-ROM. Auf dem Datenträger 9 kann beispielsweise eine Landkarte in Form einer Datenbank gespeichert sein.

Die Verarbeitungseinrichtung 2 weist einen Ausgang 10 auf, der mit drei nicht näher dargestellten Modulen verbunden ist, die verschiedene Aufgaben lösen, nämlich Modul 11 die Positionbestimmung, Modul 12 eine Routenplanung und Modul 13 eine Zielführung, d.h. Anweisungen zur Führung des Fahrzeuglenkers.

Für die Position, die im Modul 11 ermittelt wird, ist unter anderem die Entfernung wichtig, die das Fahrzeug zurückgelegt hat. Man kann nämlich die aktuelle Position dadurch ermitteln, daß man ausgehend von einer Startposition die Richtung und die in dieser Richtung zurückgelegte Entfernung vektormäßig zusammensetzt.

Zur Ermittlung der zurückgelegten Wegstrecke wird der Tachometer 4 verwendet. Die Vorgehensweise wird anhand von Fig. 2 beschrieben.

Der Tachometer 4 weist ein Geberrad 14 auf, das vier Impulsgeber 15 aufweist. Das Geberrad 14 dreht sich synchron mit einem Rad, das permanent Bodenkontakt hat. Die Impulsgeber laufen an einem Aufnehmer 16 vorbei. Man kann die Information auch auf andere Weise gewinnen, beispielsweise mit Hilfe eines Impulsgebers am Antiblockiersystem oder eines elektronischen Tachometers. Pro Umdrehung des genannten Rades werden daher im vorliegenden Ausführungsbeispiel vier Impulse erzeugt. In den meisten Fällen werden allerdings wesentlich mehr Impulse pro Umdrehung erzeugt, beispielsweise 20. Diese Impulse Ni werden in einem Zähler 17 gezählt. Hierbei ermittelt man die Impulse pro Zeiteinheit. Dargestellt ist dies durch den Ausdruck Ni/t.

Gleichzeitig werden Signale von den Satelliten 6 über die Antenne 5 empfangen. Mit Hilfe des Dopplereffektes wird in einer Geschwindigkeitsermittlungseinrichtung 18 die Geschwindigkeit vgps ermittelt, d.h. die Geschwindigkeit, mit der sich das Fahrzeug relativ zum Boden bewegt.

Die Geschwindigkeitsermittlungseinrichtung 18 ermittelt mit einer Frequenz von 1 Hz die Geschwindigkeit vgps und legt auch den Start- und Endzeitpunkt ti,j für den Zähler 17 fest. Der Endzeitpunkt tj eines Zählintervalls ist gleichzeitig der Startzeitpunkt ti für das nächste Intervall.

Da der Umfang des Rades jedenfalls prinzipiell bekannt ist und sich daraus die zurückgelegte Wegstrecke zwischen zwei Impulsen errechnen läßt, läßt sich aus der in dem Zähler 17 ermittelte Größe Ni/t ein erster Geschwindigkeitswert berechnen. Dieser Geschwindigkeitswert kann aber noch mit Fehler behaftet sein, weil sich der Umfang des Rades im Betrieb ändern kann, beispielsweise aufgrund der Fliehkraft bei höheren Geschwindigkeiten, aufgrund von Temperatureinflüssen oder aufgrund von Fahrzeugbelastungen. Um diese Fehler auszugleichen, wird in einer Korrektureinrichtung 19 der zweite Geschwindigkeitswert, nämlich die Geschwindigkeit vgps, durch den ersten Wert Ni/t dividiert. Hierbei erhält man eine Ausgangsgröße dppi, wobei die Abkürzung dpp für "distance per pulse", also Entfernung pro Impuls, steht und i die Nummer des Zählintervalls angibt.

Der guten Ordnung halber sei hier angemerkt, daß es im Grunde nicht nötig ist, in dem Zähler 17 die Division durch die Zeit vorzunehmen, weil die Information über den Zeitraum von der Geschwindigkeitsermittlungseinrichtung 18 auch an die Korrektureinrichtung 19 weitergegeben wird, wie dies durch gestrichelte Linien dargestellt ist.

In Reihe mit der Korrektureinrichtung 19 ist ein Filter 20 angeordnet, der einen gefilterten Wert $\overline{dppi}_{neu}$ nach folgender Formel bildet

$$\overline{dppi}_{neu} = \frac{i}{i+1}\ \overline{dppi}_{alt} + \frac{1}{i+1}dppi$$

wobei i einen laufenden Zähler von 0 bis $n_{max}$ bildet und nach Erreichen von $n_{max}$ konstant bleibt. Für $n_{max}$ kann man beispielsweise $n_{max} = 128$ setzen.

Der gefilterte Wert $\overline{dppi}_{neu}$ gilt als kalibriert und kann dementsprechend verwendet werden, wenn i $\geq 15$ ist. Ansonsten verwendet man wo möglich einen kalibrierten Wert aus einer anderen Klasse und sonst $\overline{dppi}$ neu.

Aus dem Produkt der Impulse Ni und der korrigierten Entfernung pro Puls $\overline{dppi}$ kann man nun die zurückgelegte Entfernung D berechnen.

Man kann nun noch einige Zusatzbedingungen implementieren. Man kann beispielsweise die Beschleunigung agps mit Hilfe des Satelliten 6 ermitteln. Wenn diese Beschleunigung größer ist als beispielsweise 1 m/s$^2$, dann wird die Kalibrierung der dppi Werte unterbrochen. Ab einer gewissen Beschleunigung läßt sich die Geschwindigkeit innerhalb eines Intervalls nicht mehr mit der nötigen Genauigkeit ermitteln. Auch sollte die mit Hilfe des Satelliten 6 ermittelte Geschwindigkeit größer als 5 m/s sein.

Ferner kann man die einzelnen Geschwindigkeiten in mehrere Klassen einteilen, beispielsweise die erste Klasse von 0 bis 70 km/h, die zweite Klasse von 70 bis 130 km/h und die dritte Klasse von 130 km/h bis zur Höchstgeschwindigkeit des betreffenden Fahrzeugs. Alternativ kann man die erste Klasse auch über den gesamten Geschwindigkeitsbereich des Fahrzeugs gehen lassen. Die zweite und dritte Klasse sind dann Teilbereiche davon. In diesem Fall werden bei Geschwindigkeiten ab der zweiten Klasse auch zwei Kalibrierungswerte ermittelt, so daß man in der ersten Klasse schneller auf die benötigte Anzahl von Kalibrierungsvorgängen kommt. Je höher die Geschwindigkeit ist, desto genauer ist die Messung und zwar sowohl beim Dopplereffekt als auch bei der Ermittlung der Werte Ni (Digitalisierungsfehler).

Man kann beispielsweise vorsehen, daß man dann, sobald ein gültiger Kalibrierungswert in der zweiten Klasse vorhanden ist, diesen dppi-Wert auch für kleinere Geschwindigkeiten verwendet, Solange man allerdings noch keinen kalibrierten Wert der zweiten Klasse erreicht hat, arbeitet man mit den Geschwindigkeitswerten der ersten Klasse.

## Patentansprüche

1. Verfahren zum Navigieren eines bodengebundenen Fahrzeugs, bei dem eine Weglängengröße mit Hilfe der Umdrehungsanzahl eines Rades gemessen wird, dadurch gekennzeichnet, daß die Weglängengröße mit Hilfe von mindestens einem externen Positionsgeber kalibriert wird.

2. Verfahren nach Anspruch 1, dadurch gekennzeichnet, daß man zur Kalibrierung einen ersten Geschwindigkeitswert mit Hilfe der Umdrehungsanzahl des Rades und einen zweiten Geschwindigkeitswert mit Hilfe des externen Positionsgebers ermittelt und beide Geschwindigkeitswerte zur Kalibrierung verwendet.

3. Verfahren nach Anspruch 2, dadurch gekennzeichnet, daß der zweite Geschwindigkeitswert mit Hilfe des Dopplereffekts bestimmt wird.

4. Verfahren nach einem der Ansprüche 1 bis 3, dadurch gekennzeichnet, daß die Kalibrierung zumindest abschnittsweise fortlaufend erfolgt.

5. Verfahren nach Anspruch 4, dadurch gekennzeichnet, daß einer der beiden Geschwindigkeitswerte in eine von mehreren Klassen eingeordnet wird, von denen jede einen vorbestimmten Geschwindigkeitsbereich umfaßt, wobei ein Kalibrierungswert in einer Klasse mit Hilfe der Geschwindigkeitswerte aus dieser Klasse ermittelt wird.

6. Verfahren nach Anspruch 5, dadurch gekennzeichnet, daß bei vorbestimmten Geschwindigkeiten ein Kalibrierungswert aus einer vorbestimmten höheren Geschwindigskeitsklasse zur Ermittlung der Entfernung verwendet wird, wenn dieser vorliegt.

7. Verfahren nach Anspruch 5 oder 6, dadurch gekennzeichnet, daß jeder Kalibrierungswert aus einer Vielzahl von Kalibrierungsvorgängen ermittelt wird.

8. Verfahren nach Anspruch 7, dadurch gekennzeichnet, daß der Kalibrierungswert durch eine Filterung der Ergebnisse der einzelnen Kalibrierungsvorgänge gebildet wird.

9. Verfahren nach einem der Ansprüche 1 bis 8, dadurch gekennzeichnet, daß die Kalibrierung unterbleibt, wenn die Beschleunigung die mit Hilfe des externen Positionsgebers bestimmt wird, einen vorbestimmten Beschleunigungswert überschreitet.

10. Verfahren nach Anspruch 9, dadurch gekennzeichnet, daß der vorbestimmte Beschleunigungswert 1 m/s$^2$ ist.

11. Verfahren nach einem der Ansprüche 1 bis 10, dadurch gekennzeichnet, daß die Kalibrierung unterbleibt, wenn die Geschwindigkeit die mit Hilfe des externen Positionsgebers bestimmt wird, kleiner als 5 m/s ist.

12. Verfahren nach einem der Ansprüche 1 bis 11, dadurch gekennzeichnet, daß man als Weglängengröße eine Entfernung pro Puls ermittelt, wobei die Pulse aufintegriert werden, bis ein neues Signal vom externen Positionsgeber zur Verfügung steht.

## Fig.1

## Fig.2